Europäisches Patentamt

European Patent Office

Office européen des brevets

(11) Veröffentlichungsnummer: **0 430 226 A2**

## (12) EUROPÄISCHE PATENTANMELDUNG

(21) Anmeldenummer: 90122806.4

(51) Int. Cl.5: **G01S 15/04**

(22) Anmeldetag: 29.11.90

(30) Priorität: 30.11.89 US 443684

(43) Veröffentlichungstag der Anmeldung:
05.06.91 Patentblatt 91/23

(84) Benannte Vertragsstaaten:
DE DK ES FR GB IT SE Patentblatt 00/1

(71) Anmelder: DEERE & COMPANY
1 John Deere Road
Moline, Illinois 61265(US)

(72) Erfinder: **Rapsdell, Bill Joe**
**1405 - 27th Street**
**Moline, Illinois 61265(US)**
Erfinder: **Phelan, James J.**
**5275 Crestview Heights Drive**
**Bettendorf, Iowa 52722(US)**

(74) Vertreter: **Feldmann, Bernhard et al**
**DEERE & COMPANY European Office, Patent**
**Department Steubenstrasse 36-42 Postfach**
**503**
**W-6800 Mannheim 1(DE)**

(54) Verfahren und Vorrichtung zur Erfassung sich nähernder Objekte.

(57) Es wird ein Verfahren und eine Vorrichtung zur Erfassung von in einen zu überwachenden Bereich eindringenden Objekten vorgeschlagen, bei dem periodisch Sendesignale in den Bereich ausgesendet werden. Die Echosignale, die durch in dem Bereich befindliche Objekte reflektiert werden, werden aufgefangen und ausgewertet. Um eine hohe Betriebssicherheit zu gewährleisten, wird zunächst ein Signatur-Datenfeld durch kumulative Bearbeitung anfänglicher Signatur-Echosignale, die nicht durch eindringende Objekte reflektiert wurden, erzeugt. Nachfolgend werden aus Nichtsignatur-Echosignalen, die gegebenenfalls durch eindringende Objekte reflektiert wurden, abgeleitete Nichtsignatur-Daten mit entsprechenden Daten des Signatur-Datenfeldes verglichen, und es wird ein Alarmsignal erzeugt, wenn die Nichtsignatur-Daten von den Signaturdaten des Signatur-Datenfeldes abweichen. Bei der Auswertung werden jedoch die Signatur-Daten und/oder Nichtsignatur-Daten übergangen, die einen zugehörigen Signatur-Schwellwert bzw. Nichtsignatur-Schwellwert nicht überschreiten.

FIG. I

## VERFAHREN UND VORRICHTUNG ZUR ERFASSUNG SICH NÄHERNDER OBJEKTE

Die Erfindung betrifft ein Verfahren und eine Vorrichtung zur Erfassung von in einen zu überwachenden Bereich eindringenden Objekten, bei dem periodisch Sendesignale in den Bereich ausgesendet werden, deren Echosignale, die durch in dem Bereich befindliche Objekte reflektiert werden, aufgefangen und ausgewertet werden.

Durch die US-PS 4,499,564 ist ein Näherungsüberwachungssystem bekannt geworden, bei dem die reflektierte Wellenzugform mit einer Referenzwellenzugform verglichen wird. Bei diesem System stützt sich die Referenzwellenzugform auf statistische Mittelwerte einer Vielzahl von reflektierten Wellenzügen. Hierauf werden die reflektierten Wellenzugformen statistisch mit der Referenzwellenzugform verglichen. Ein Alarmsignal wird ausgelöst, wenn ein Abtastpunkt des reflektierten Wellenzuges von dem entsprechenden Punkt der Referenzwellenzugform um mehr als eine Standardabweichung abweicht.

Ein auf einen Mikroprozessor gestütztes System ist in der US-PS 4,800,540 beschrieben. Durch dieses System werden 100 Datenpakete bearbeitet. Dabei wird eine Referenztabelle erzeugt, die nur aus Echo- oder Nichtecho-Flags für die Abtastzeitpunkte besteht, aus denen sich widerspruchsfreie Angaben von Echos oder Nichtechos ableiten lassen. In einem Nachweismodus werden dann solche Teile der Referenztabelle, die Übergänge in benachbarte Speicherorte enthalten, sowie die entsprechenden Abtastsignalspeicherstellen ignoriert.

Derartige Systeme sind komplex aufgebaut und dafür vorgesehen, das Hintergrundrauschen auszufiltern, um fehlerhafte Alarmanzeigen zu vermindern. Soll jedoch ein derartiges System für die Verwendung auf einem Fahrzeug oder auf einem Teil einer schweren Maschine angepaßt werden, so steht der Sicherheitsaspekt im Vordergrund. Aus Sicherheitsgründen ist es vorzuziehen, einige fehlerhafte Anzeigen zu akzeptieren, um sicherzustellen, daß tatsächliche Annäherungen zuverlässig ein Alarmsignal auslösen.

Die mit der Erfindung zu lösende Aufgabe wird darin gesehen, ein möglichst einfaches Verfahren der eingangs genannten Art anzugeben, das mit hoher Betriebssicherheit durchführbar ist und die genannten Nachteile vermeidet. Die zugehörige Vorrichtung soll möglichst einfach aufgebaut sein und einen zuverlässigen Betrieb ermöglichen.

Die Aufgabe wird erfindungsgemäß dadurch gelöst, daß zunächst ein Signatur-Datenfeld durch kumulative Bearbeitung anfänglicher Signatur-Echosignale, die nicht durch eindringende Objekte reflektiert wurden, erzeugt wird, daß nachfolgend aus Nichtsignatur-Echosignalen, die gegebenenfalls durch eindringende Objekte reflektiert wurden, abgeleitete Nichtsignatur-Daten mit entsprechenden Daten des Signatur-Datenfeldes verglichen werden, daß ein Alarmsignal erzeugt wird, wenn die Nichtsignatur-Daten von den Signatur-Daten des Signatur-Datenfeldes abweichen, und daß Signatur-Daten und/oder Nichtsignatur-Daten übergangen werden, die einen zugehörigen Signatur-Schwellwert bzw. Nichtsignatur-Schwellwert nicht überschreiten.

Die Verwendung von Schwellwerten ermöglicht eine differenzierte Auswertung von Signalen naher beziehungsweise entfernt liegender Objekte. Vorzugsweise können die Schwellwerte während des Empfanges der Echosignale gemäß einer Zeitfunktion vermindert werden, so daß die Empfindlichkeit der relativ schwachen Signale entfernter Objekte gesteigert wird.

Durch hohe Schwellwerte am Beginn des Empfanges wird eine fehlerhafte Auslösung durch nahe Objekte vermieden, während tiefe Schwellwerte gegen Ende des Empfanges eine Steigerung der Empfindlichkeit für entfernte Objekte bewirken. Es ist auch von Vorteil, die Echosignale gemäß einer Zeitfunktion mit zunehmendem Verstärkungsfaktor zu verstärken.

Das Verfahren wird erfindungsgemäß durch ein Näherungsüberwachungssystem aufgeführt, das einen Ultraschallmeßwandler, einen Sender-Empfänger und eine mikroprozessorgestützte Signalauswerteinheit aufweist.

Weitere vorteilhafte Ausgestaltungen und Weiterbildungen der Erfindung gehen aus den Unteransprüchen hervor.

Anhand der Zeichnung, die ein Ausführungsbeispiel der Erfindung zeigt, sollen die Erfindung sowie weitere Vorteile und vorteilhafte Weiterbildungen und Ausgestaltungen der Erfindung näher beschrieben und erläutert werden.

Es zeigt:

Fig. 1      das vereinfachte Blockdiagramm eines Näherungsüberwachungssystems gemäß der vorliegenden Erfindung,

Fig. 2      einen detaillierten Schaltkreis des Sender-Empfängers aus Fig. 1,

Fig. 3      einen detaillierten Schaltkreis des Bandpaßfilters aus Fig. 1,

Fig. 4      einen detaillierten Schaltkreis des Verstärkers und des Hüllkurven-Demodulator-Verstärkers aus Fig. 1,

Fig. 5      einen detaillierten Schaltkreis des Teiles der Fig. 1, das den Mikroprozessor enthält, und

Fig. 6a - 6h　ein logisches Flußdiagramm des Algorithmusses, der durch den Mikroprozessor der Fig. 1 ausgeführt wird.

Gemäß Fig. 1 enthält die Überwachungsanlage 10 einen Ultraschallumformer XM1, wie er beispielsweise unter der Teilenummer 607281 von der Fa. Polaroid Corp., USA hergestellt wird, der an einen Sender-Empfänger 11 angeschlossen ist. Der Ultraschallumformer XM1 richtet ein Ultraschallsignal gegen zu beobachtende Objekte. Das Objekt oder die Objekte reflektieren ein Ultraschallechosignal zurück zu dem Ultraschallumformer XM1. Das Echosignal wird mit einer Zeitverzögerung empfangen, die von der Entfernung zwischen dem Objekt und dem Ultraschallumformer XM1 abhängt. Der Sender-Empfänger 11 erhält ein Sendesignal T, mit Bestandteilen von 45 und 55 kHz, sowie ein Sendesperrsignal Tc. Beide Signale T, Tc werden von einem Mikroprozessor MP geliefert. Bei dem Mikroprozessor MP kann es sich um einen Standardtyp mit einem integralen Analog-Digital-Umwandler (A/D) handeln, wie beispielsweise Typ MC 68HC11, der durch die Fa. Motorola, USA hergestellt wird. Der Sender-Empfänger 11 liefert das Sendesignal an den Ultraschallumformer XM1. Ferner empfängt er das Echo- oder Empfangssignal R von dem Ultraschallumformer XM1 und gibt es an ein Frequenzfilter 14 zweiter Ordnung mit einer Mittenfrequenz von 50 kHz weiter.

Das Bandpaßfilter 14 empfängt ebenfalls das Sendesperrsignal Tc. Es gibt ein gefiltertes Eingangssignal Rf an einen Verstärker 16 ab, der einen Verstärkungsfaktor von 25 aufweist. Der Ausgang des Verstärkers 16 steht mit einem Hüllkurven-Demodulator/Verstärker 20 in Verbindung. Auf diese Weise wird ein gleichgerichtetes, demoduliertes, verstärktes und gefiltertes Hüllkurvensignal E mit einem Gesamtverstärkungsfaktor von 125 an einen A/D-Eingang des Mikroprozessors geliefert.

Der Mikroprozessor 12 empfängt das verstärkte, gefilterte Hüllkurvenempfangssignal, führt einen Algorithmus aus und erzeugt unter bestimmten Bedingungen ein Alarmsignal, wie nachfolgend beschrieben wird. Einzelheiten eines Ausführungsbeispieles für die in Fig. 1 dargestellte Schaltung gehen aus den Figuren 2 bis 4 und der Bauteiletabelle hervor.

Gemäß Fig. 5 ist ein RC-Netzwerk 22 mit den Betriebsart-, Leistungs-, Unterbrecher- und A/D-Referenzeingängen des Mikroprozessors 12 verbunden. Ferner ist an den Mikroprozessor 22 ein Zeitgeber-Schwingquarzkreis 24, ein Temperaturkompensationskreis 26 und ein Löschkreis 28 angeschlossen.

Der Mikroprozessor 22 führt einen Algorithmus aus, der im folgenden anhand der Fig. 6a bis 6h beschrieben wird. Der Algorithmus beginnt in den Schritten 100 - 120 mit Start, dem Betriebsbereitmachen des Systems und der Inbetriebnahme des Analog-Digital-Umwandlers A/D. Für den Fall, daß mehrere A/D-Einheiten im Gesamtsystem zusammengefaßt sind, wird in Schritt 130 der A/D-Status eingelesen, um zu bestimmen, ob die vorliegende Einheit ein Leitrechner oder ein von anderen Einheiten abhängiger Rechner ist. Schritt 130 kann übergangen werden, wenn nur eine Einheit als isolierte Einheit betrieben wird. Alsdann stellt Schritt 150 einen Anlauf-Sendetaktgeber ein, und Schritt 160 startet erneut den A/D. Durch die Schritte 170 - 230 wird dann der Durchschnittsgrundwert oder -nullwert ZVAL für den A/D-Wert aus einer Serie (beispielsweise aus 16) von aufeinanderfolgend eingelesenen A/D-Werten berechnet.

Durch Schritt 240 wird eine vorherbestimmbare Signatur-Abtastanzahl SSCAN (beispielsweise 20) festgelegt, welche die Zahl der separaten Echosignale repräsentiert, die in Schritt 630 verwendet oder verarbeitet werden, um ein charakteristisches Datenfeld für die Echosignale, das sogenannte Signatur-Datenfeld zu erzeugen. Dieses Datenfeld enthält die anfänglichen oder Referenz-Echosignale, die für den Anfangszustand, in dem kein Störobjekt anwesend ist, charakteristisch sind und mit denen später gewonnene Echosignale gegebenenfalls unter Anwesenheit von Störobjekten in Schritt 720 verglichen werden. Schritt 250 initialisiert einen Signatur-Amplitudenschwellwert AMPTHS für die charakteristischen Echosignale und einen Nichtsignatur-Amplitudenschwellwert AMPTHN für die nichtcharakteristischen Echosignale. Echosignale, die unter diesen Schwellwerten liegen, werden übergangen (siehe Schritte 600 - 620 und 690 - 710). Diese Schwellwerte sind anfangs groß und werden fortschreitend und schrittweise auf kleinere Werte vermindert.

Schritt 260 initialisiert eine Impulsfolgenzahl und eine Impulszahl. Die Impulsfolgenzahl repräsentiert die Anzahl (vorzugsweise 7 oder 13) der Impulsfolgen, durch welche jedes Sendesignal gebildet wird. Die Impulszahl repräsentiert die Anzahl (vorzugsweise 8) der Umschaltmöglichkeiten (Flip-Flop) des Ausganges A innerhalb jeder Impulsfolge. Zur Erfassung kleiner Entfernungen werden 7 und größerer Entfernungen 13 Impulsfolgen verwendet. Die Schritte 270 - 290 bewirken, daß durch Schritt 285 eine Synchronschwingung eingeschaltet oder durch Schritt 295 ein Zähler eingestellt wird. Durch Einstellen des Zählers wird die Sendezeit zum richtigen Zeitpunkt gestartet, der davon abhängt, ob diese besondere Einheit ein Leitrechner oder ein abhängiger Rechner ist.

Die Schritte 300 - 340 bewirken (gemeinsam mit Schritt 260) eine periodische Umschaltung (bei Schritt 300) des Ausgangssignals am Ausgang A des Mikroprozessors zwischen zwei Zuständen, um einen Sendesignalimpuls zu erzeugen. Diese Impulsfolge wird an den Sender-Empfänger 11 angelegt und bewirkt, daß der Ultraschallumformer XM1 eine kurzzeitige Ultraschallsequenz aussendet, die auf Oberflächen innerhalb eines bestimmten Bereiches auftrifft und durch diese als Echo zurückreflektiert wird. Der Ultraschallumformer XM1 empfängt den reflektierten Ultraschall, welcher in ein verstärktes Echohüllsignal umgewandelt und dem Eingang 49 des A/D des Mikroprozessors 12 zugeführt wird.

Im Anschluß an die Erzeugung dieser Sendeimpulsfolgen schaltet Schritt 350 ein Sendesperrsignal Tc ein, welches an den Sender-Empfänger 11 angelegt wird, um Eigenschwingungen in dem Sender-Empfänger 11 zu unterdrücken.

Dann schaltet Schritt 360 die Synchronschwingung zum Zwecke der Synchronisation mehrerer Einheiten in Verbindung mit den Schritten 270 - 290 aus.

Ein Zeitgeberbezugswert CTR (der von einem in dem Mikroprozessor eingebauten, festverdrahteten, ununterbrochen laufenden Zeitgeber abgeleitet wird) wird in Schritt 370 gesetzt, um eine Verzögerungszeit von beispielsweise 1,5 Millisekunden zwischen dem Start des Sendesignals und dem Start einer Empfangsperiode darzustellen. In Schritt 380 wird ein Abtastzähler auf Null gesetzt, um die Dauer einer Zeitspanne darzustellen, während der die Echohüllsignale verarbeitet werden. Schritt 390 veranlaßt den Algorithmus so lange zu warten, bis die Verzögerungszeitspanne abgelaufen und das Sendesignal unterbrochen ist. Hierdurch können Eigenschwingungen des Sender-Empfängers 11 abklingen, bevor ein Echohüllsignal bearbeitet wird. Hierauf wird in Schritt 410 der interne A/D wieder gestartet, um einen binären Datenwert zu erzeugen, der die Amplitude des Echohüllsignals am Eingangsanschluß 49 des Mikroprozessors 12 wiedergibt. Durch Schritt 420 wird ein Nullzeitbezugswert CNTN des Zeitgebers gesichert.

In Schritt 430 wird eine Sollzeit für die Abtastintervalle gesetzt, und Schritt 440 veranlaßt den Algorithmus zu warten, bis die Sollzeit des Abtastintervallzeitgebers abgelaufen ist. Hierdurch wird das Echosignal am A/D-Eingang des Mikroprozessors 12 periodisch in einer gewünschten Zeitfolge, beispielsweise alle 140 Mikrosekunden, abgefragt. Schritt 450 sichert nun den alten CNTN-Wert aus Schritt 420 als einen gegenwärtigen Zeitbezugswert CNTC des Zeitgebers, welcher in Verbindung mit einem variablen Verstärkungsmerkmal, das später anhand der Schritte 540 und 550 beschrieben wird, benutzt wird.

In Schritt 470 wird der am Eingang 49 des Mikroprozessors 12 anstehende Wert abgefragt, von analog auf digital umgewandelt und als Datenwert gespeichert. Dann wird in Schritt 480 der A/D erneut gestartet, so daß sein Register für die spätere Konvertierung eines neuen Datenwertes freigegeben ist. Durch Schritt 490 wird der umgewandelte Datenwert als binärer ADC-Wert gespeichert, welcher die derzeitige Amplitude des Echohüllsignals darstellt. Mit Schritt 500 wird dann der derzeitige Zählstand des Zeitgebers, vom Beginn des Sendens an, als ein CNTN-Wert gesichert.

In Schritt 510 wird der ZVAL-Wert aus Schritt 230 von dem ADC-Wert subtrahiert, um einen DATA-Wert zu erhalten. Durch die Schritte 520 und 530 wird sichergestellt, daß im späteren Ablauf des Algorithmusses nur nicht-negative DATA-Werte verwendet werden.

Durch die Schritte 540 und 550 wird ein Verstärkungswert GAIN aus dem zur Zeit geltenden CNTN-Wert bestimmt. Auf diese Weise wird der Verstärkungswert GAIN in Abhängigkeit der Zeit von einem tiefen Wert (zur Abgleichung starker Amplituden früher Echos, die von nahe gelegenen Oberflächen herrühren) zu einem hohen Wert (zur Abgleichung schwacher Amplituden später Echos, die von entfernteren Oberflächen herrühren) verändert.

In den Schritten 560 und 570 wird der DATA-Wert mit dem GAIN-Wert multipliziert und der Wert des Produktes als ADC gespeichert. In Schritt 580 wird der Abtastzählwert CNTS mit einem Minimumwert verglichen, der eine nahe Entfernung repräsentiert (beispielsweise 60 cm), so daß Objekte, die sich auf kleinere Entfernungen annähern, ignoriert werden. Ist CNTS kleiner als dieser Minimumwert, dann wird der Algorithmus auf Schritt 640 gerichtet. Andernfalls schreitet der Algorithmus zu Schritt 590 weiter, indem die Anzahl der Signatur-Abtastungen abgefragt wird, um festzustellen, ob der Algorithmus die Bearbeitung der ursprünglichen zwanzig Echosignale zur Ermittlung des Signatur-Datenfeldes abgeschlossen hat. Ist dies nicht der Fall, so schreitet der Algorithmus zu Schritt 600 weiter, andernfalls zu Schritt 690.

Durch die Schritte 600 und 610 wird der Signatur-Amplitudenschwellwert AMPTHS fortschreitend und schrittweise von einem anfänglichen hohen Wert (der etwa 1,14 Volt repräsentiert) herunter bis zu einem Minimumwert (der etwa 0,38 Volt repräsentiert) vermindert. Hierdurch wird eine

Abschwächung der Signale entfernter Objekte ausgeglichen. Schritt 620 vergleicht dann den Datenwert ADC von Schritt 570 mit dem AMPTHS-Wert. Ist ADC nicht kleiner als AMPTHS, so wird durch Schritt 630 ein Flag oder ein Binärsignal in einer entsprechenden Position in einem Signatur-Datenfeld, das 360 Bits enthält, gespeichert. Das Signatur-Datenfeld enthält anfänglich lauter Nullen.

Jedoch wird durch die Schritte 620 und 630 immer dann eine Null durch eine Eins ersetzt, wenn während der Bearbeitung der ersten zwanzig Echosignale der Datenwert ADC den AMPTHS-Wert übertrifft. Ist ADC kleiner als AMPTHS, so schreitet der Algorithmus zu Schritt 640 weiter, ohne das entsprechende Bit in dem Signatur-Datenfeld zu ändern. Ist somit ein Flag (eine Eins) in das Signatur-Datenfeld gelangt, so bleibt dieses Flag an seinem Ort des Datenfeldes, bis das System zurückgesetzt wird. Auf diese Weise werden die ersten zwanzig Echosignale kumulativ bearbeitet, und es wird ein Datenfeld aus 360 Bits mit Nullen und Einsen erzeugt, welches eine kumulative Signatur der ersten zwanzig Echosignale darstellt.

Wenn das Signatur-Datenfeld komplettiert ist (Bearbeitung von 20 Echosignalen), dann richtet Schritt 590 den Algorithmus auf die Schritte 690 und 700, durch die fortschreitend und schrittweise der Amplitudenschwellwert AMPTHN für Nichtsignatur-Signale (Prüfung auf Näherung von Fremdobjekten) von einem hohen Wert (der etwa 1,5 Volt repräsentiert) herunter auf einen Minimumwert (der etwa 0,29 Volt repräsentiert) vermindert wird. Dann vergleicht Schritt 710 den neuesten ADC Datenwert mit AMPTHN und richtet den Algorithmus auf Schritt 640 und ignoriert ADC-Werte, die kleiner sind als AMPTHN. Ist der ADC-Wert gleich oder größer AMPTHN, so richtet Schritt 710 den Algorithmus auf Schritt 720, welcher das Signatur-Datenfeld prüft. Befindet sich eine Eins an dem entsprechenden Ort des Signatur-Datenfeldes, so bedeutet dies, daß das vorliegende Echosignal mit der Signatur übereinstimmt, und Schritt 720 richtet den Algorithmus zu Schritt 640. Befindet sich eine Null an dem entsprechenden Ort des Signatur-Datenfeldes, so bedeutet dies, daß das vorliegende Echosignal von der Signatur abweicht, und Schritt 720 richtet den Algorithmus auf die Schritte 730 - 750, durch die ein Alarmsignal ausgelöst wird, welches für eine bestimmte Zeitdauer an dem Ausgang A des Mikroprozessors 12 ansteht. Dann setzt Schritt 760 einen Zeitgeber zur Taktgabe des nächsten Sendesignals, so daß die Sendesignale mit einer Folgefrequenz alle 100 Millisekunden erzeugt werden. Schritt 760 richtet dann den Algorithmus auf Schritt 655.

Gemäß Fig. 6h erhöht Schritt 640 schrittweise einen Zeitgeber oder Zähler und Schritt 641 prüft, ob dieser Zeitgeber oder Zähler einen maximalen Abtastzählwert erreicht hat. Der maximale Abtastzählwert kann gewählt werden, um die maximale Objektentfernung festzulegen, für die Echosignale durch dieses System bearbeitet werden können. Wurde der maximale Abtastzählwert noch nicht erreicht, so speichert Schritt 645 den gegenwärtigen Abtastzählwert CTS ab und der Algorithmus wird zurück auf Schritt 430 gerichtet, um die nächste Abtastung des Echosignals zu bearbeiten. Wurde der maximale Prüfzählwert jedoch erreicht, so richtet Schritt 641 den Algorithmus auf Schritt 650, der einen Zeitgeber zur Taktgabe des nächsten Sendesignals einstellt, so daß das Sendesignal alle 100 Millisekunden erzeugt wird.

Schritt 655 löst mit diesem neuen Sendezeitwert den Zeitgeberbezugswert CTR aus. Dann nehmen die Schritte 660 und 670 (zusammen mit Schritt 590) eine Prüfung und schrittweise Rückstellung der Anzahl der Signatur-Abtastungen vor, so daß nur die gewünschte Zahl (z. B. 20) von Echosignalen bearbeitet wird, um das anfängliche Echosignal des Signatur-Datenfeldes zu bestimmen, mit dem später empfangene Echosignale (in Schritt 710) verglichen werden. Nach Schritt 670 kehrt der Algorithmus zu Schritt 250 zurück, durch den ein neues Sendesignal erzeugt und der Algorithmus erneut durchgeführt wird.

Auch wenn die Erfindung lediglich an Hand eines Ausführungsbeispiels beschrieben wurde, erschließen sich für den Fachmann im Lichte der vorstehenden Beschreibung viele verschiedenartige Alternativen, Modifikationen und Varianten, die unter die vorliegende Erfindung fallen.

BAUTEILETABELLE

Symbol
Beschreibung

| | |
|---|---|
| T1 | Transformator 40:1, Poloroid No. 605541 |
| X1 | Schwingquarz, 8,0 MHz |
| U1, U2 | IC, Quad OP-AMP, MC 33074 |
| U6 | IC, Reset Circuit, MC33064P-5 |
| Q1 | Transistor, MMBTA42,SMO |
| Q2 | Transistor, Darlington, MMBTA14, SMO |
| Q6 | Transistor, FET 2N4393 |
| D1, D2 | Diode, 1N4006 |
| D3 + 4, D5 + 6 | Diodenpaar, SMO MMB04000 |
| D7 + 8 | |
| D20 | Diode, 1N914 |
| C36 | Kondensator, Electrolytic 220 µF, 50 VDC |
| C2 | |

| Symbol | Beschreibung |
|---|---|
| C1 | Kondensator, Tantalum, 10 µF, 10 %, 5 VDC |
| C3, C4, C6 | Kondensator, Polyester, 0.022 µF, 10 %, 400 VDC |
| C12, C13, C21, C22, C23 | Kondensator, Ceramic Chip, 0.1 µF 10 %, 50 VDC, X7R, SMO |
| C7, C8 | Kondensator, Ceramic Chip, .001 µF, 10 %, 50 VDC, X7R, SMO |
| C10 | Kondensator, Ceramic Chip, 470 pF, 5 %, 50 VDC, C06, SMO |
| C11 | Kondensator, Ceramic Chip, 390 pF, 5 % 100 VDC, C06, SMO |

| Symbol | Beschreibung |
|---|---|
| C5 | Kondensator, Ceramic Chip, 100 pF, 5 %, 100 VDC, C06, SMO |
| C33, C34 | Kondensator, Ceramic Chip, 27 pF, 10 %, 200 VDC C06, SMO |
| C35 | Kondensator, .01 µF |
| R2, R6 | Widerstand, SMO, 7.5 (Ohms), 5 %, 1/4 W |
| R54 | Widerstand, SMO, 402, 1 %, 1/8 W |
| R11 | Widerstand, SMO, 787, 1 %, 1/8 W |
| R52 | Widerstand, SMO, 1.33 K, 1 % 1/8 W |
| R1, R3, R5, | Widerstand, SMO, 2.0 K, 5 %, 1/8 W |
| R26 | |
| R25 | Widerstand, SMO, 2.10 K, 1 %, 1/8 W |
| R18 | Widerstand, SMO, 2.55 K, 1 %, 1/8 W |
| R78 | Widerstand, SMO, 2.61 K, 1 %, 1/8 W |
| R10 | Widerstand, SMO, 3.32 K, 1 %, 1/8 W |
| R53 | Widerstand, SMO, 3.24 K, 1 %, 1/8 W |
| R17 | Widerstand, SMO, 5.11 K, 1 %, 1/8 W |
| R22 | Widerstand, SMO, 5.23 K, 1 %, 1/8 W |
| R8, R21, R79 | Widerstand, SMO, 10 K, 5 %, 1/8 W |
| R16 | Widerstand, SMO, 11 K, 5 %, 1/8 W |
| R1 | Widerstand, SMO, 16 K, 5 %, 1/8 W |
| R4, R7, R13 | Widerstand, SMO, 20 K, 5 %, 1/8 W |
| R14, R15 | |
| R19, R20 | Widerstand, SMO, 40.2 K, 1 %, 1/8 W |
| R23, R24, R27 | Widerstand, SMO, 51.1 K, 1 % 1/8 W |
| R9 | Widerstand, SMO, 100 K, 5 %, 1/8 W |
| R31a, R32a | Widerstand, SMO, 400 K, 5 %, 1/8 W |
| R77 | Widerstand, SMO, 10 H, 5 %, 1/8 W |
| RT1 | Thermistor, 10 K, 250 C |

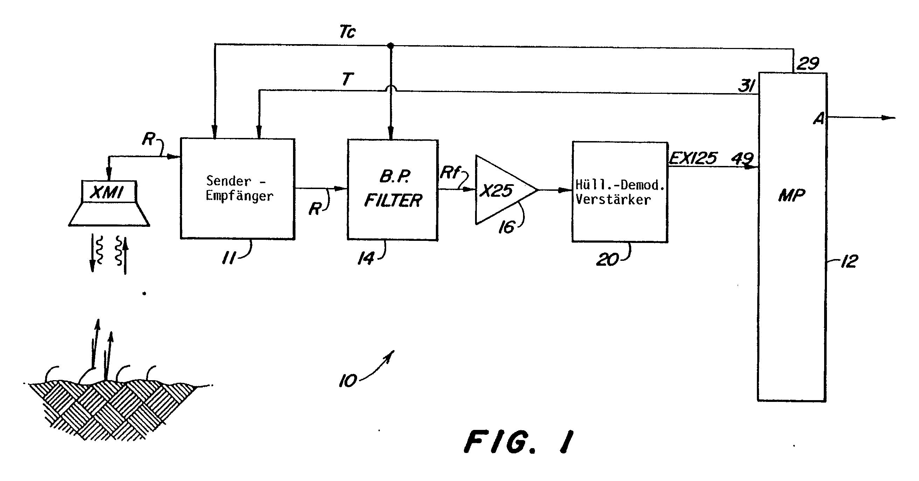

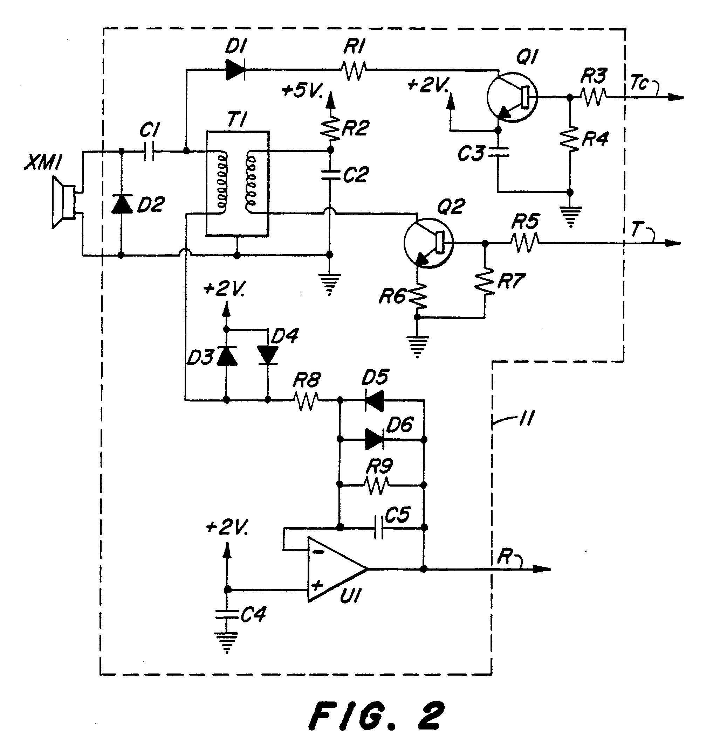

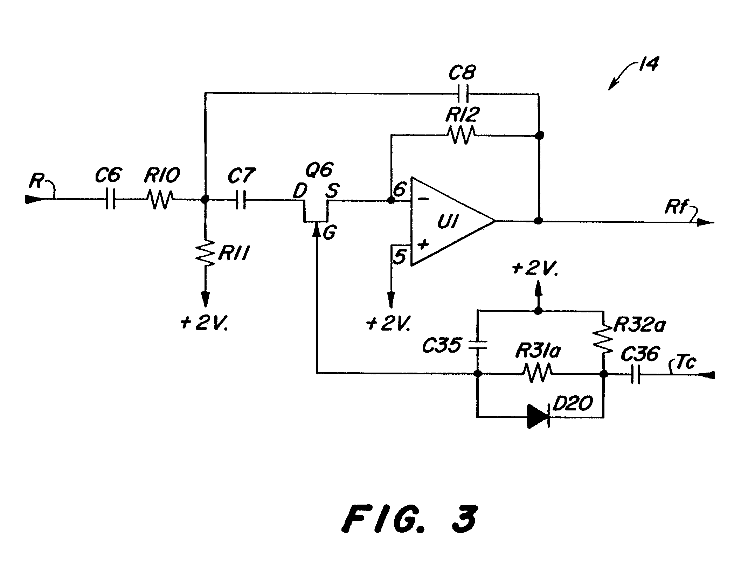

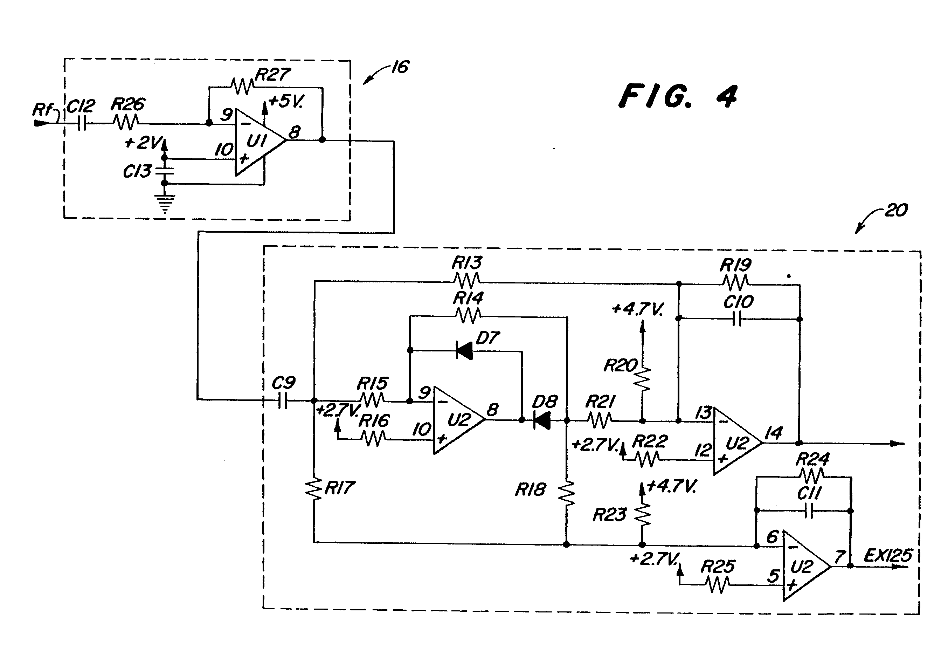

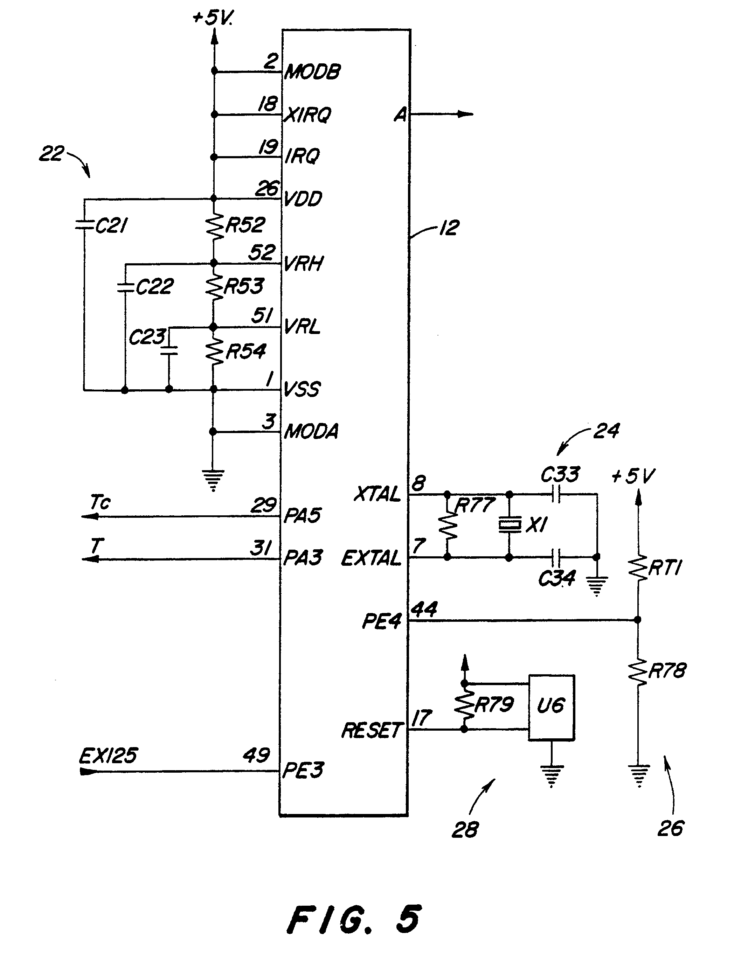

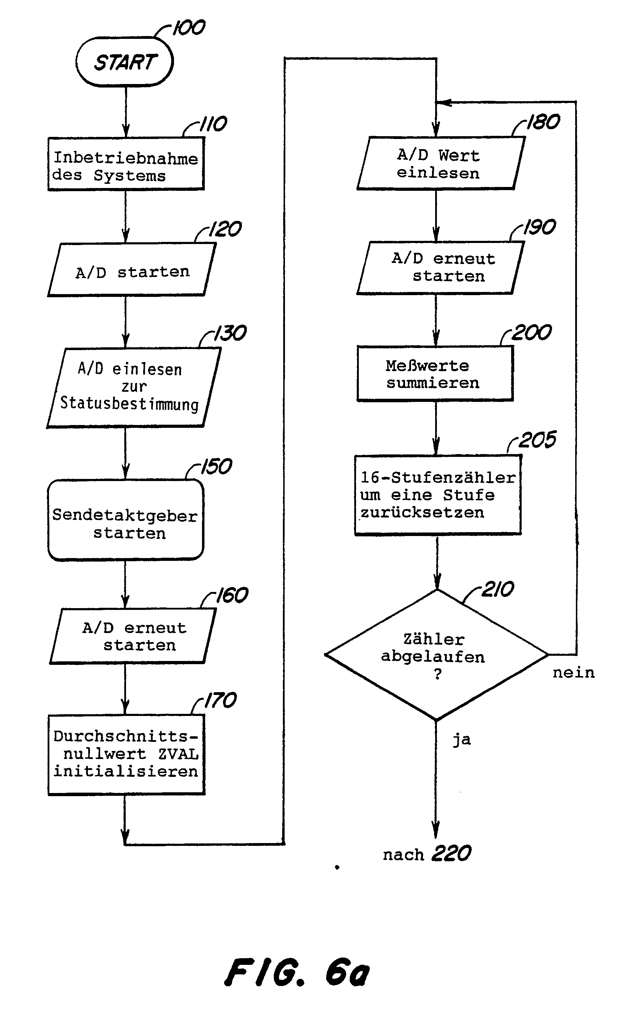

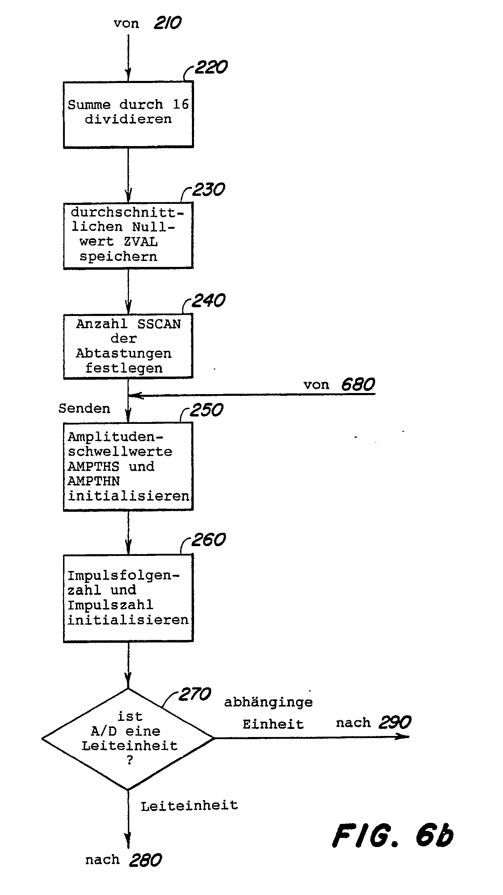

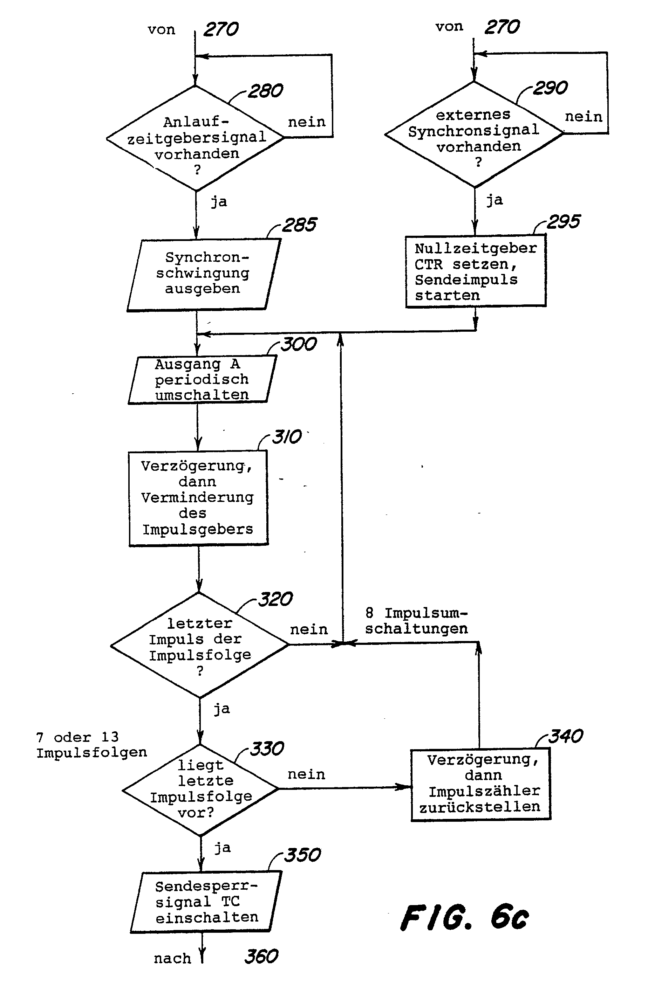

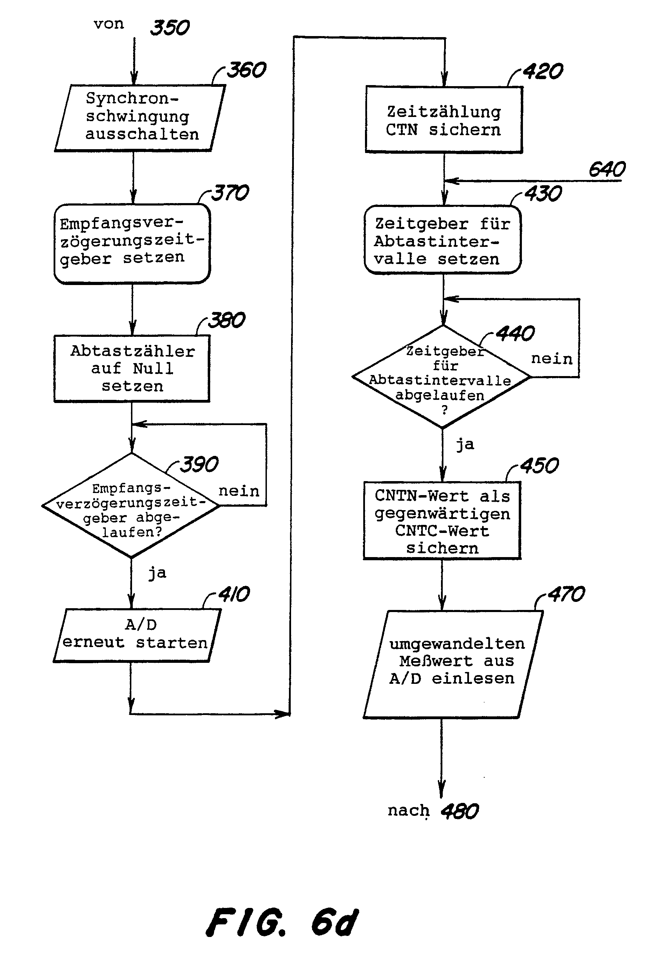

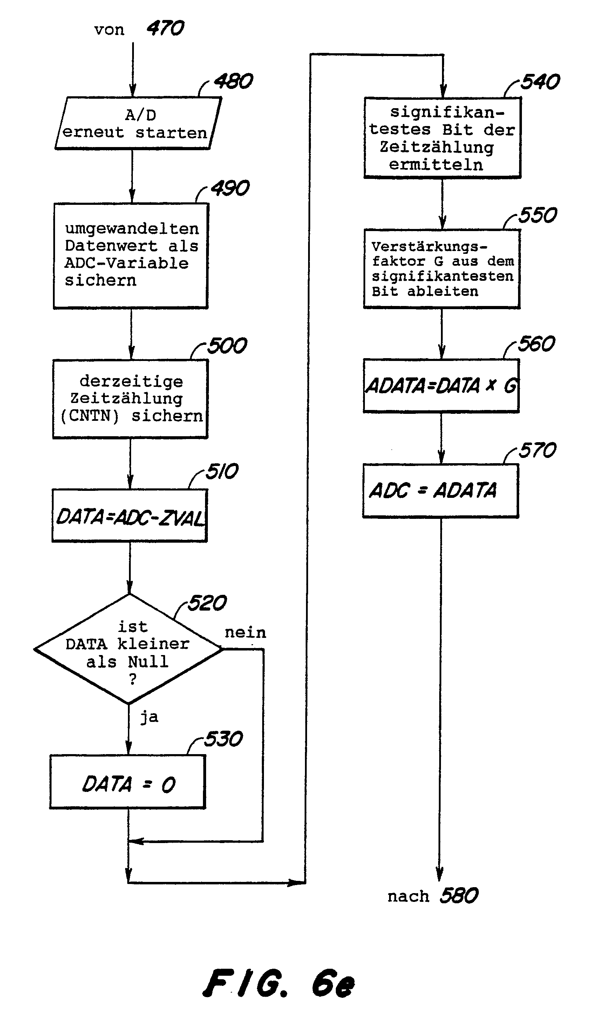

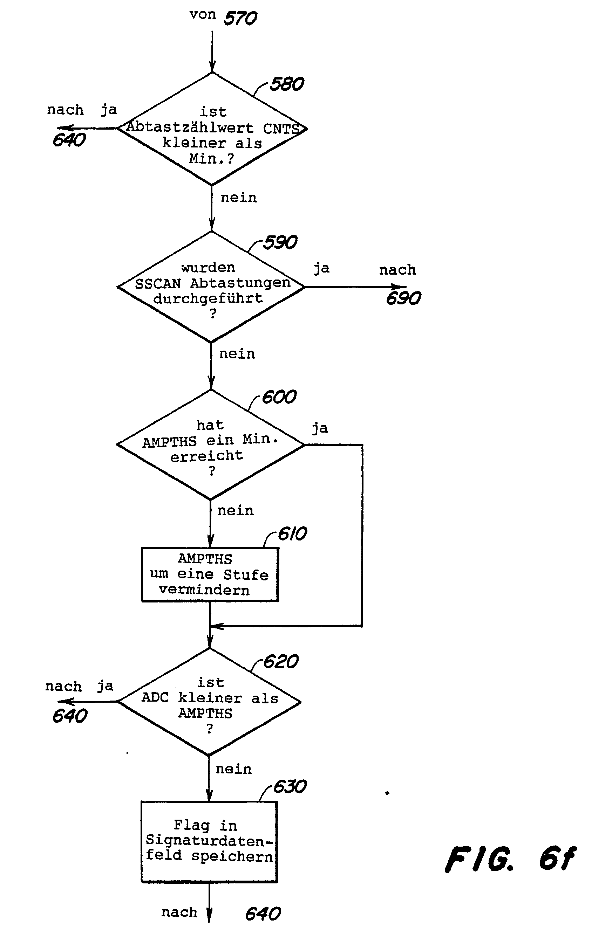

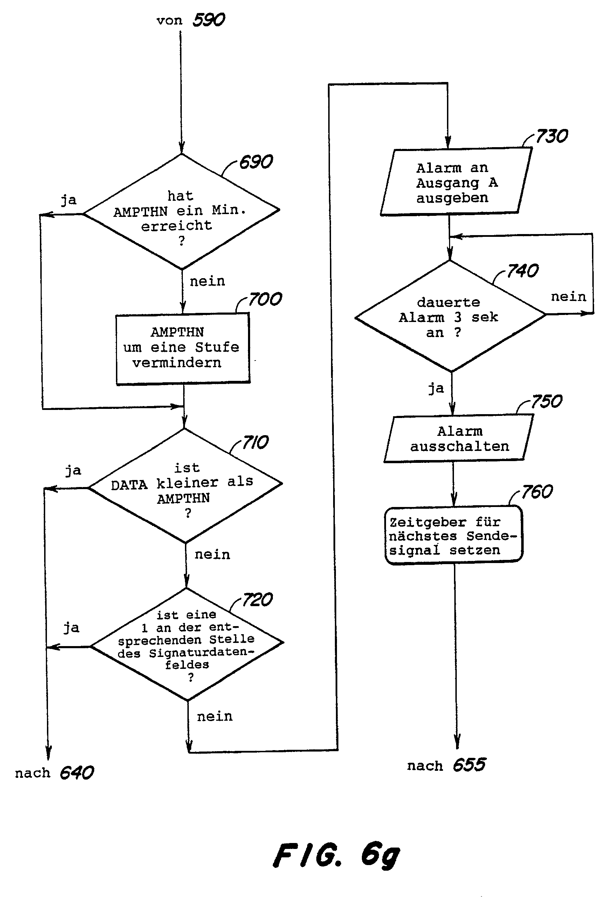

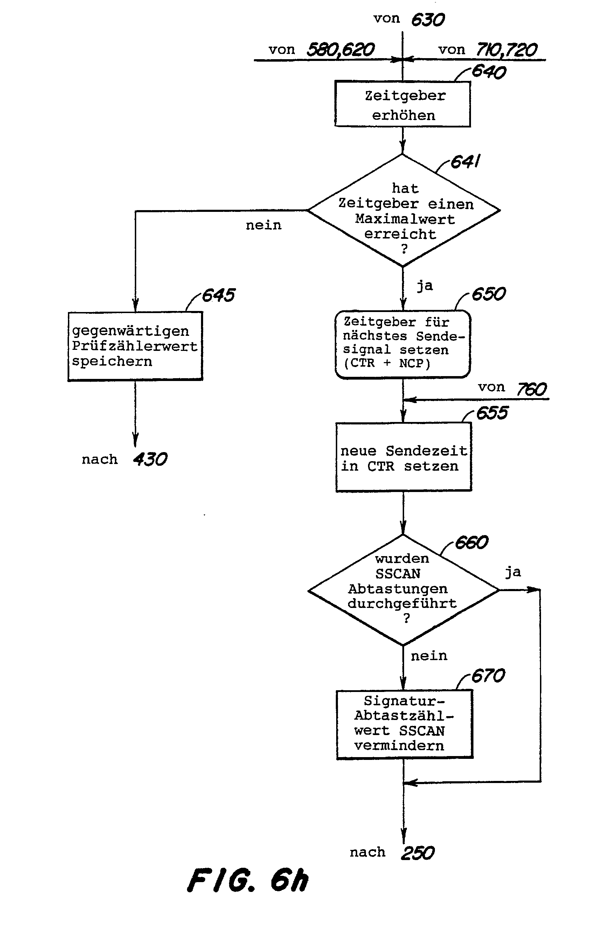

## Ansprüche

1. Verfahren zur Erfassung von in einen zu überwachenden Bereich eindringenden Objekten, bei dem periodisch Sendesignale in den Bereich ausgesendet werden, deren Echosignale, die durch in dem Bereich befindliche Objekte reflektiert werden, aufgefangen und ausgewertet werden, dadurch gekennzeichnet, daß zunächst ein Signatur-Datenfeld durch kumulative Bearbeitung anfänglicher Signatur-Echosignale, die nicht durch eindringende Objekte reflektiert wurden, erzeugt wird, daß nachfolgend aus Nichtsignatur-Echosignalen, die gegebenenfalls durch eindringende Objekte reflektiert wurden, abgeleitete Nichtsignatur-Daten mit entsprechenden Daten des Signatur-Datenfeldes verglichen werden, daß ein Alarmsignal erzeugt wird, wenn die Nichtsignatur-Daten von den Signatur-Daten des Signatur-Datenfeldes abweichen, und daß Signatur-Daten und/ oder Nichtsignatur-Daten übergangen werden, die einen zugehörigen Signatur-Schwellwert bzw. Nichtsignatur-Schwellwert nicht überschreiten.

2. Verfahren nach Anspruch 1, dadurch gekennzeichnet, daß jeweils einem Ausschnitt eines Signatur-Echosignals ein Bit eines Datenfeldes zugeordnet ist und daß das Signatur-Datenfeld erzeugt wird, indem jeweils ein anfängliches Bit des Datenfeldes durch einen Flagwert ersetzt wird, sofern ein dem Bit zugeordneter Ausschnitt des Signatur-Echosignals wenigstens die Größe eines vorgebaren Signatur-Schwellwertes erreicht.

3. Verfahren nach Anspruch 1 oder 2, dadurch gekennzeichnet, daß jedes Echosignal durch einen Verstär kungsfaktor verstärkt wird, der gemäß einer Zeitfunktion von einem Minimum auf ein Maximum ansteigt.

4. Verfahren nach einem der Ansprüche 1 bis 3, dadurch gekennzeichnet, daß der Signatur-Schwellwert und/oder der Nichtsignatur-Schwellwert gemäß einer Zeitfunktion vermindert werden.

5. Verfahren nach einem der Ansprüche 2 bis 4, dadurch gekennzeichnet, daß dann ein Alarmsignal ausgelöst wird, wenn ein Nichtsignatur-Echosignalausschnitt den Nichtsignatur-Schwellwert überschreitet und sich kein Flagwert in dem entsprechenden Bereich des Signatur-Datenfeldes befindet.

6. Näherungsüberwachungssystem zur Durchführung des Verfahrens nach einem der Ansprüche 1 bis 5 mit Mitteln zur periodischen Abgabe eines Sendesignals, mit Mitteln zum Empfang von Echosignalen, mit Mitteln zur Erzeugung eines Signatur-Datenfeldes, mit Mitteln zum Vergleichen von Nichtsignatur-Daten mit Daten des Datenfeldes, mit Mitteln zum Vergleich von Signatur-Daten und/oder Nichtsignatur-Daten mit Signatur- bzw. Nichtsignatur-Schwellwerten und mit Mitteln zur Erzeugung eines Alarmsignales.

FIG. 1

FIG. 2

FIG. 3

FIG. 4

F I G. 5

START *100*

Inbetriebnahme des Systems *110*

A/D starten *120*

A/D einlesen zur Statusbestimmung *130*

Sendetaktgeber starten *150*

A/D erneut starten *160*

Durchschnitts- nullwert ZVAL initialisieren *170*

A/D Wert einlesen *180*

A/D erneut starten *190*

Meßwerte summieren *200*

16-Stufenzähler um eine Stufe zurücksetzen *205*

Zähler abgelaufen ? *210*

nein

ja

nach *220*

# FIG. 6a

von *210*

*220*

```
Summe durch 16
  dividieren
```

*230*

```
durchschnitt-
lichen Null-
wert ZVAL
speichern
```

*240*

```
Anzahl SSCAN
    der
Abtastungen
  festlegen
```

von *680*

Senden

*250*

```
Amplituden-
schwellwerte
AMPTHS und
AMPTHN
initialisieren
```

*260*

```
Impulsfolgen-
zahl und
Impulszahl
initialisieren
```

*270*

```
   ist
 A/D eine
Leiteinheit
    ?
```

abhänginge
Einheit          nach *290*

Leiteinheit

nach *280*

*FIG. 6b*

14

von **270**

```
          280
    ╱─────────╲
   ╱  Anlauf-   ╲      nein
  ╱ zeitgebersignal╲────────┐
  ╲  vorhanden    ╱
   ╲     ?      ╱
    ╲─────────╱
         │ ja
         ▼
    ┌─────────┐  285
   ╱ Synchron- ╱
  ╱  schwingung╱
 ╱  ausgeben  ╱
└─────────┘
```

von **270**

```
          290
    ╱─────────╲
   ╱ externes  ╲      nein
  ╱ Synchronsignal╲──────┐
  ╲  vorhanden  ╱
   ╲    ?     ╱
    ╲───────╱
        │ ja
        ▼
  ┌──────────┐  295
  │ Nullzeitgeber│
  │ CTR setzen,  │
  │ Sendeimpuls  │
  │ starten      │
  └──────────┘
```

```
    ┌──────────┐  300
   ╱ Ausgang A  ╱
  ╱ periodisch ╱
 ╱  umschalten╱
└──────────┘
       │
       ▼
  ┌──────────┐  310
  │ Verzögerung,│
  │   dann      │
  │ Verminderung│
  │    des      │
  │ Impulsgebers│
  └──────────┘
       │
       ▼
          320
    ╱──────────╲
   ╱  letzter   ╲     nein        8 Impulsum-
  ╱ Impuls der   ╲──────────►     schaltungen
  ╲ Impulsfolge  ╱
   ╲     ?      ╱
    ╲─────────╱
         │ ja
         ▼
```

7 oder 13
Impulsfolgen

```
          330
    ╱──────────╲
   ╱   liegt     ╲     nein       ┌──────────┐  340
  ╱   letzte      ╲──────────►    │ Verzögerung,│
  ╲ Impulsfolge   ╱               │   dann      │
   ╲   vor?      ╱                │ Impulszähler│
    ╲─────────╱                   │ zurückstellen│
         │ ja                     └──────────┘
         ▼
    ┌──────────┐  350
   ╱ Sendesperr-╱
  ╱  signal TC  ╱
 ╱ einschalten ╱
└──────────┘
       │
       ▼
  nach      360
```

**FIG. 6c**

von **350**

**360**
Synchronschwingung
ausschalten

**370**
Empfangsverzögerungszeitgeber setzen

**380**
Abtastzähler
auf Null
setzen

**390**
Empfangsverzögerungszeitgeber abgelaufen?

nein

ja

**410**
A/D
erneut starten

**420**
Zeitzählung
CTN sichern

**640**

**430**
Zeitgeber für
Abtastintervalle setzen

**440**
Zeitgeber
für
Abtastintervalle
abgelaufen
?

nein

ja

**450**
CNTN-Wert als
gegenwärtigen
CNTC-Wert
sichern

**470**
umgewandelten
Meßwert aus
A/D einlesen

nach **480**

*FIG. 6d*

von **470**

**480**
A/D
erneut starten

**490**
umgewandelten
Datenwert als
ADC-Variable
sichern

**500**
derzeitige
Zeitzählung
(CNTN) sichern

**510**
*DATA=ADC-ZVAL*

**520**
ist
DATA kleiner
als Null
?

nein

ja

**530**
*DATA = 0*

**540**
signifikantestes Bit der
Zeitzählung
ermitteln

**550**
Verstärkungsfaktor G aus dem
signifikantesten
Bit ableiten

**560**
*ADATA=DATA × G*

**570**
*ADC = ADATA*

nach **580**

**F.I.G. 6e**

von *570*

*580*

nach  ja
←
*640*

ist
Abtastzählwert CNTS
kleiner als
Min.?

nein

*590*

wurden
SSCAN Abtastungen
durchgeführt
?

ja      nach
→
*690*

nein

*600*

hat
AMPTHS ein Min.
erreicht
?

ja

nein

*610*

AMPTHS
um eine Stufe
vermindern

*620*

nach  ja
←
*640*

ist
ADC kleiner als
AMPTHS
?

nein

*630*

Flag in
Signaturdatenfeld speichern

*FIG. 6f*

nach  *640*

von **590**

**690**
hat
AMPTHN ein Min.
erreicht
?

ja

nein

**700**
AMPTHN
um eine Stufe
vermindern

**710**
ist
DATA kleiner als
AMPTHN
?

ja

nein

**720**
ist eine
1 an der entsprechenden Stelle
des Signaturdatenfeldes
?

ja

nein

nach **640**

**730**
Alarm an
Ausgang A
ausgeben

**740**
dauerte
Alarm 3 sek
an ?

nein

ja

**750**
Alarm
ausschalten

**760**
Zeitgeber für
nächstes Sendesignal setzen

nach **655**

# FIG. 6g

von *630*

von *580,620*          von *710,720*

*640*

Zeitgeber
erhöhen

*641*

hat
Zeitgeber einen
Maximalwert
erreicht
?

nein

ja

*645*

gegenwärtigen
Prüfzählerwert
speichern

*650*

Zeitgeber für
nächstes Sendesignal setzen
(CTR + NCP)

von *760*

nach *430*

*655*

neue Sendezeit
in CTR setzen

*660*

wurden
SSCAN
Abtastungen
durchgeführt
?

ja

nein

*670*

Signatur-
Abtastzählwert SSCAN
vermindern

nach *250*

# FIG. 6h